# EUROPEAN PATENT SPECIFICATION

(11) **EP 1 597 102 B1**
(45) Date of publication and mention of the grant of the patent: **21.06.2006**
(21) Application number: 04712661.0
(22) Date of filing: 19.02.2004
(51) Int. Cl.: B60J 7/04, B60J 7/20, B60J 7/047

(54) **A MOTOR CAR WHICH CAN BE CONFIGURED SELECTIVELY EITHER AS A SPIDER OR AS A COUPE**
KRAFTFAHRZEUG DAS ALTERNATIVERWEISE ALS SPIDER ODER ALS COUPE GESTALTET WERDEN KANN
VEHICULE AUTOMOBILE QUI PEUT ETRE CONFIGURE ALTERNATIVEMENT COMME SPIDER OU COMME COUPE

(30) Priority: 28.02.2003 EP 03425132
(43) Date of publication of application: 23.11.2005
(73) Proprietor: Bertone S.p.A., 10141 Torino (IT)
(72) Inventor: DE BONIS SCIARAFFIA, Michele, I-85010 Pignola (Potenza) (IT)
(74) Representative: Gerbino, Angelo
(86) International application number: PCT/IT2004/000073
(87) International publication number: WO 2004/076217

(56) References cited:
- EP-A- 0 101 322
- EP-A- 0 989 009
- EP-A- 0 992 384
- US-A1- 2002 003 359
- US-A1- 2002 135 200

## Description

The present invention relates to a motor car with an openable roof according to the preamble of claim 1.

In more detail, this motor car includes a rear luggage compartment with an upper closure element and a roof having an aperture over the median and rear portions of the passenger compartment, with which are associated at least first and second sliding panels, selectively positionable in a first configuration closing the aperture, in which the aforesaid panels are juxtaposed in series along the longitudinal axis of the car, and a second configuration in which the aperture is open and the said panels are stored in the luggage compartment, the front edge of the said luggage compartment covering element being adjacent the rear edge of the rearmost panel which is in its most retracted position in the said first closure configuration. In the first, closure configuration, the motor car has the appearance of a coupé, while in the second, open configuration it has the appearance of a spider.

A known motor car of the aforesaid type is described in the earlier document US-A-2002/0135200. In this motor car, when the sliding panels are stored in the luggage compartment they are arranged vertically in the front portion thereof, taking up a considerable amount of space, in particular in the spider configuration when all the panels are thus stored.

The object of the present invention is therefore to provide a motor car which can be configured selectively as a spider model or a coupé model and in which the space taken up in the luggage compartment by the panels in the spider configuration does not overly compromise luggage capacity.

This object is achieved according to the invention by providing a motor car of the type indicated at the beginning of this description and characterised in that it includes a support structure housed in the upper portion of the said luggage compartment beneath the closure element, the said panels being stacked within the said support structure in the second configuration in which the aperture is open.

In this configuration, the panels are stored in the least useful portion of the luggage compartment, thus minimizing the penalty on the luggage capacity of the luggage space.

Further advantages and characteristics of the present invention will become apparent from the following detailed description, provided purely by way of non-limitative example with reference to the appended drawings, in which:
Figure 1 is a longitudinally sectioned schematic view of a car of the invention configured as a coupé,
Figures 2 to 5 are longitudinally sectioned schematic views of the car of Figure 1, illustrating various stages in the conversion from the coupé configuration to the spider configuration,
Figure 6 is a longitudinally sectioned schematic view of the car of the invention configured as a spider,
Figure 7 is a schematic perspective view of the car of Figure 1 configured as a coupé,
Figure 8 is a schematic perspective view of the car of Figure 1 configured as a spider, and
Figure 9, 10 and 11 are schematic views in longitudinal section, which illustrate the final phases of the transition from the coupé configuration to the spider configuration of a second embodiment of the invention.

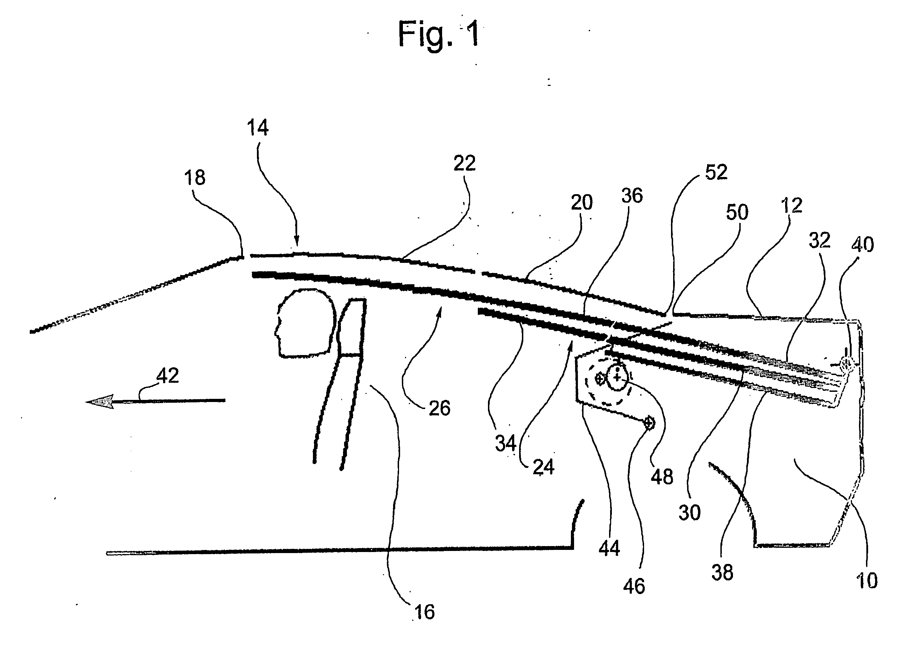

A motor car (see Figure 1) includes a rear luggage compartment 10 having an upper closure element 12 and a roof 14 with an aperture 18 over the median and rear portions of the passenger compartment 16 which has associated first and second sliding panels 20, 22. It is an advantage if both the panels 20, 22 are made of a transparent material, such as glass or a plastics material, for example.

At each side, the motor car also includes a first guide 24 for the first panel 20 to slide along and a second guide 26 for the second panel 22 to slide along. Each guide 24, 26 is formed by forward portions 34 and 36 respectively, fixed to the body and rear portions 30 and 32 respectively fixed to a support structure 38. This latter is pivoted by its rear portion about a first axis 40 orthogonal to the longitudinal axis 42 of the car and has actuator means 48 for causing it to rotate about this axis 40. The two portions of each guide 24, 26 are simply positioned next to each other and are not connected in any way, whereby each movable portion 30, 32 is able to be rotated without any hindrance from the respective fixed portions 34, 36.

The structure and manufacturing technique of the guides 24, 26 of the support structure 38 and the associated actuator means 48 are known per se and can be manufactured using any method familiar to a man skilled in the art; they are therefore not described in detail here. The sliding movement of the panels 20, 22 is also conventional per se and can be controlled either manually or by any type of actuator member.

Structures of this type are described, for example, in the documents DE- A-101 21 147 and WO-A-95 29 073.

The motor car also includes a separating member between the luggage compartment 10 and the passenger compartment 16, constituted by a shaped partition 44 pivoted by its lower edge about a second axis 46 orthogonal to the longitudinal axis 42 of the motor car. In alternative embodiments of the invention, which are not illustrated in the drawings, the partition 44 could be mounted slidably. In either case, the partition 44 has operating means, which are known per se, for moving it from a position in which it separates the luggage compartment 10 from the passenger compartment 16, into a position in which the luggage compartment 10 is in communication with the passenger compartment 16', and back again.

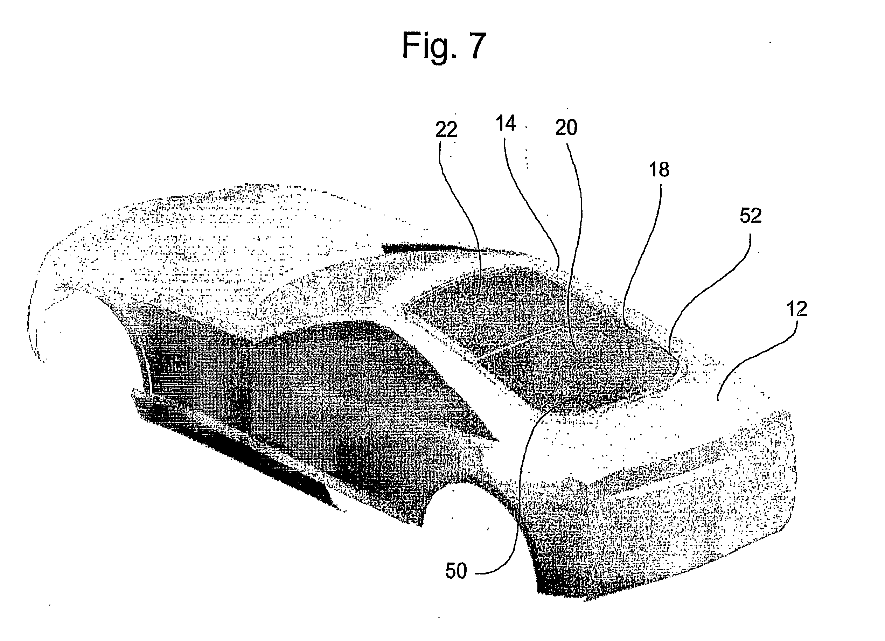

The panels 20, 22 can be positioned (see Figures 1 and 7) in a first configuration closing the aperture 18, in which they are arranged in series along the longitudinal axis 42 of the vehicle, and the front edge 50 of the element 12 for closing the luggage compartment 10 is adjacent the rear edge 52 of the first panel 20 which is in the rearmost position. In this configuration, the motor vehicle has the appearance of a coupé with the first panel 20 acting as rear window and the luggage compartment 10 separated from the passenger compartment 16 by the partition 44 which is in its closed position.

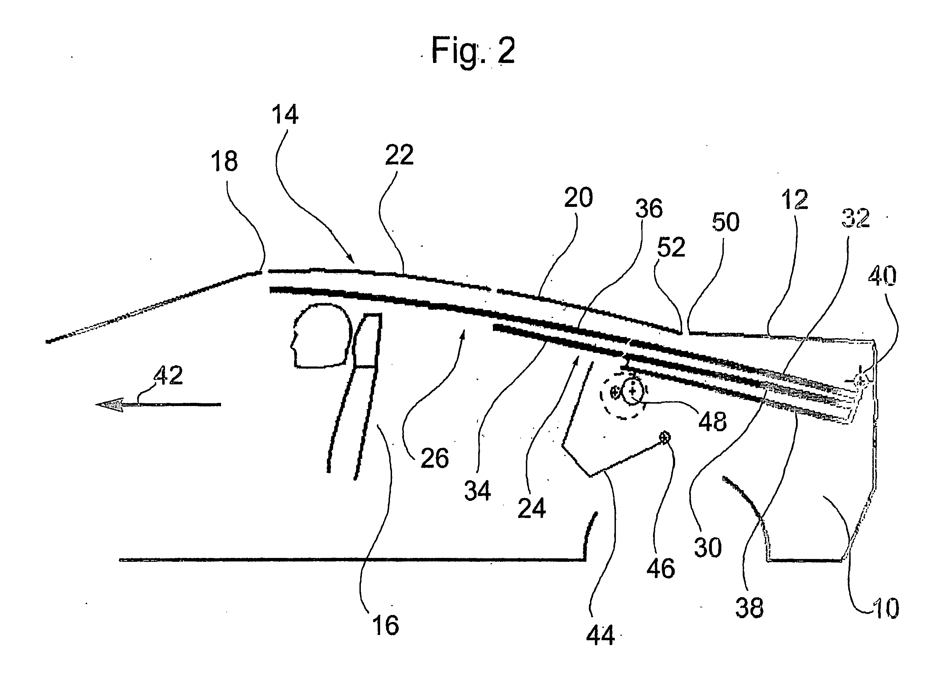

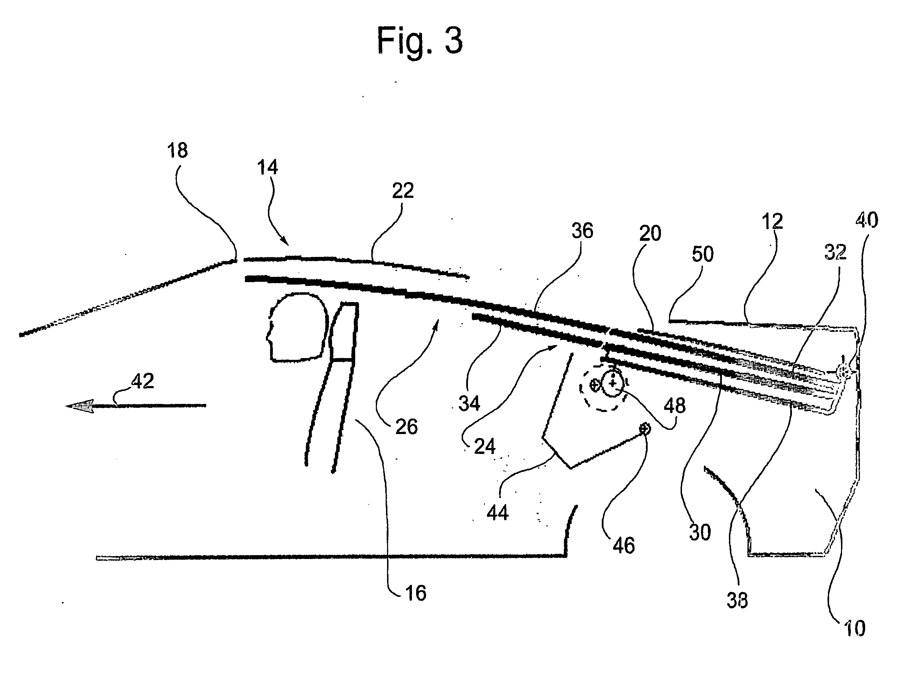

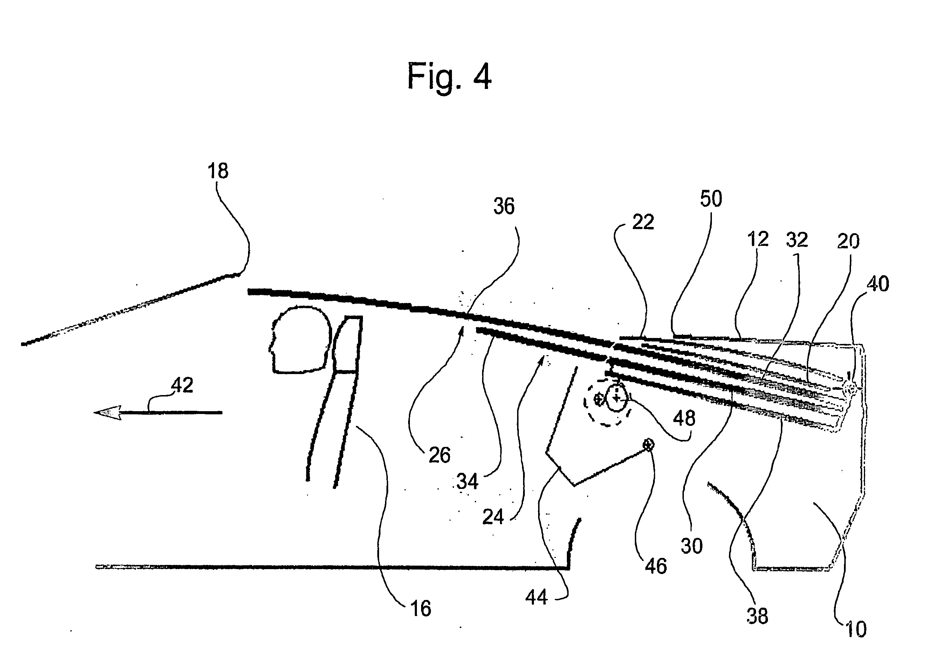

In order to convert the vehicle into its spider configuration, the partition 44 must first be rotated about its axis 46 (see Figure 2), thereby placing the luggage compartment 10 in communication with the passenger compartment 16. The first panel 20 (see Figure 3) and the second panel 22 (see Figure 4) are then slid back on their respective guides 24, 26. When these operations have been completed, the aperture 18 is completely uncovered and the panels 20, 22 are stored one on top of the other on the respective portions 30, 32 of the guides 24, 26 which are fixed to the support structure 38.

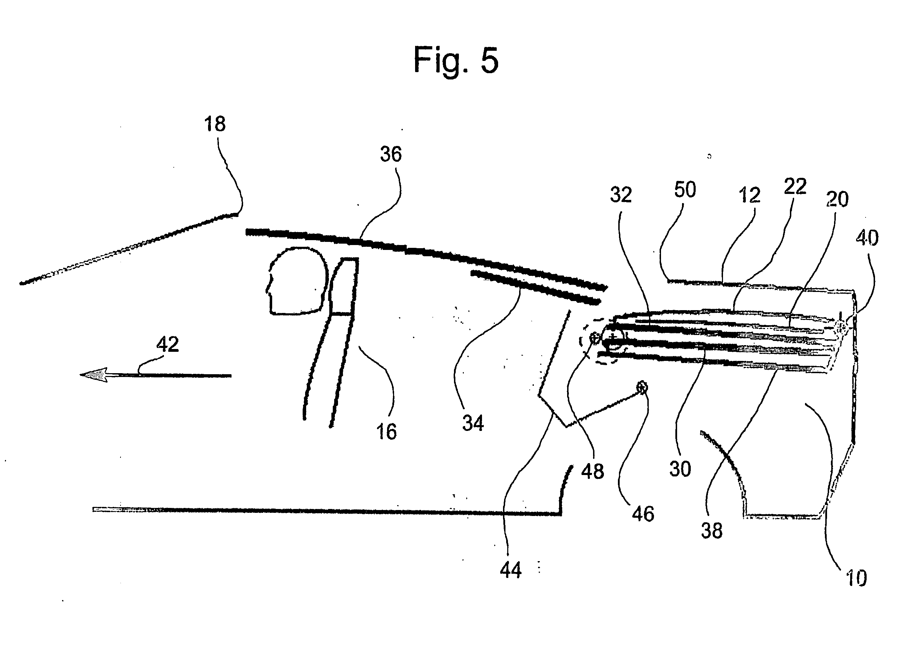

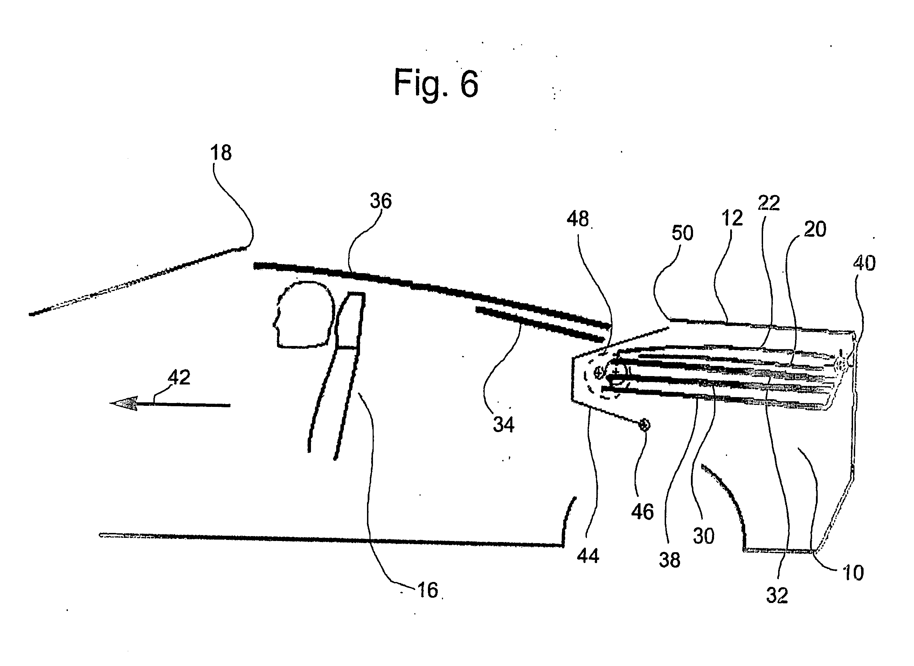

The respective actuator means then control the support structure 38, with its associated panels 20, 22 (see Figure 5) to rotate downwards about the first axis 40 orthogonal to the longitudinal axis 42, and then control the partition 44 (see Figure 6) to rotate upwards about the second axis 46 orthogonal to the longitudinal axis 42.

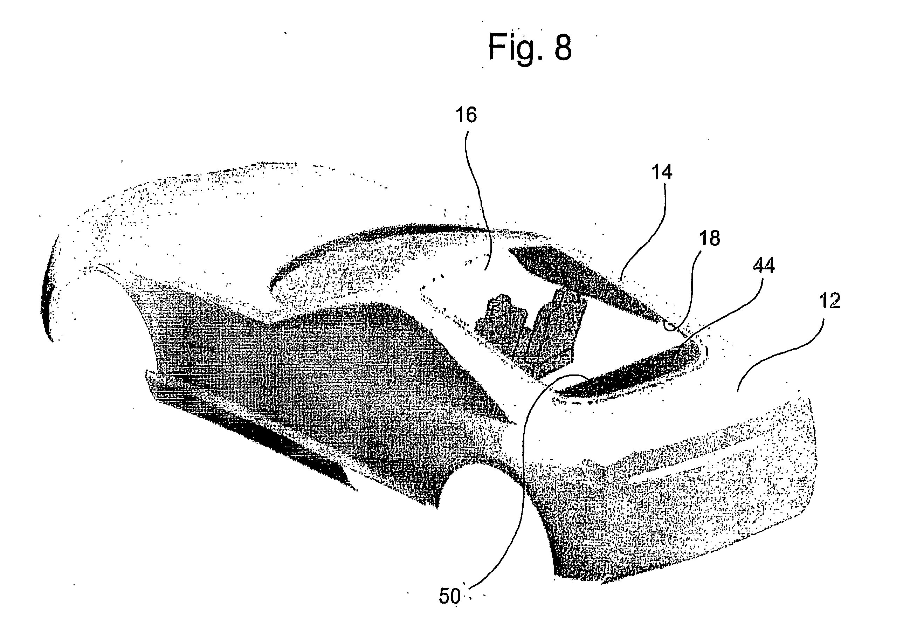

The motor car is now in its spider configuration (see Figures 6 and 8), in which the aperture 18 is completely open, with no transverse elements or the like covering it, while the structure 38 which supports the panels 20, 22 is housed in the upper portion of the luggage compartment 10, beneath the cover element 12. The luggage compartment 10 is separated from the passenger compartment 16 by the partition 44, in such a way that the aesthetics of the motor car are not spoilt by the panels 20, 22 stored on top of each other in the support structure 38, as these panels 20, 22 cannot be seen.

In order to reconfigure the car as a coupé, one need only carry out the operations described above in the reverse order.

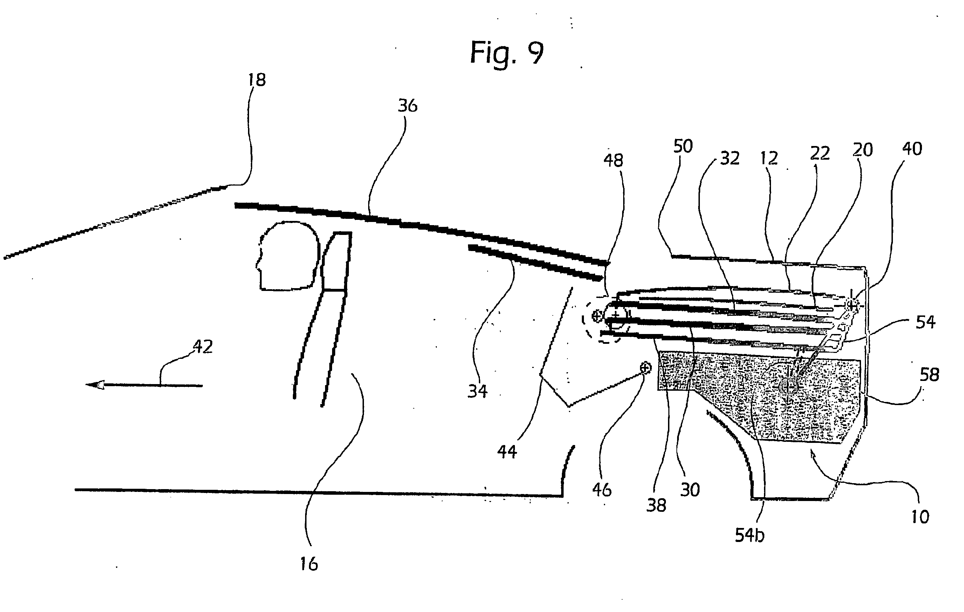

Figures 9, 10 and 11 illustrate a second embodiment of the motor car of the invention, in which the same numbers used with reference to the preceding drawings indicate parts which are the same or equivalent.

The only variation with respect to the first embodiment consists in the fact that additional operating means 54 are provided for varying the spatial position occupied by the first axis 40 of the support structure 38, while maintaining this axis 40 orthogonal to the longitudinal axis 42 of the motor car. These means 54, shown schematically in the drawings, are conventional per se and could be of a mechanical, pneumatic or electrical type, for example.

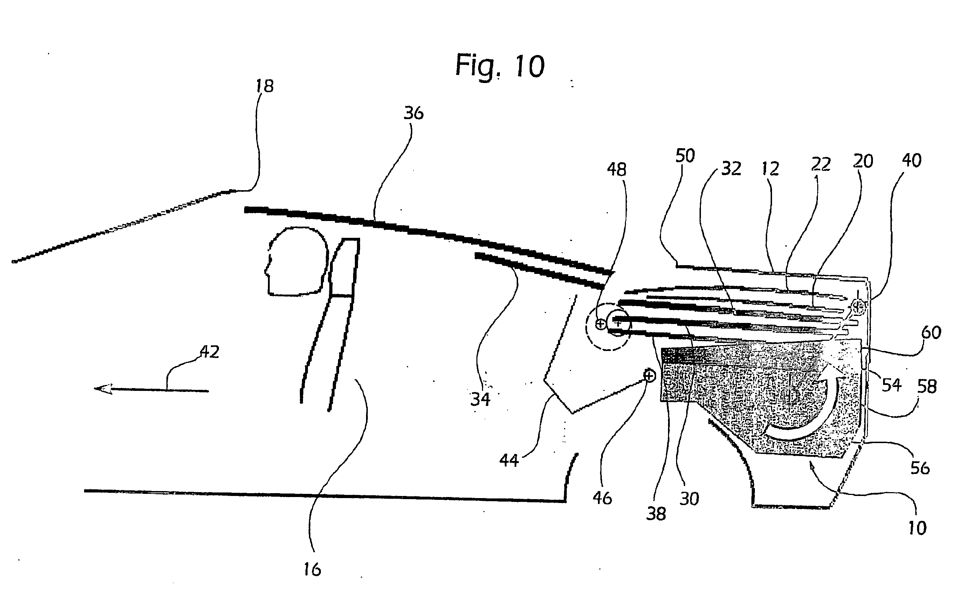

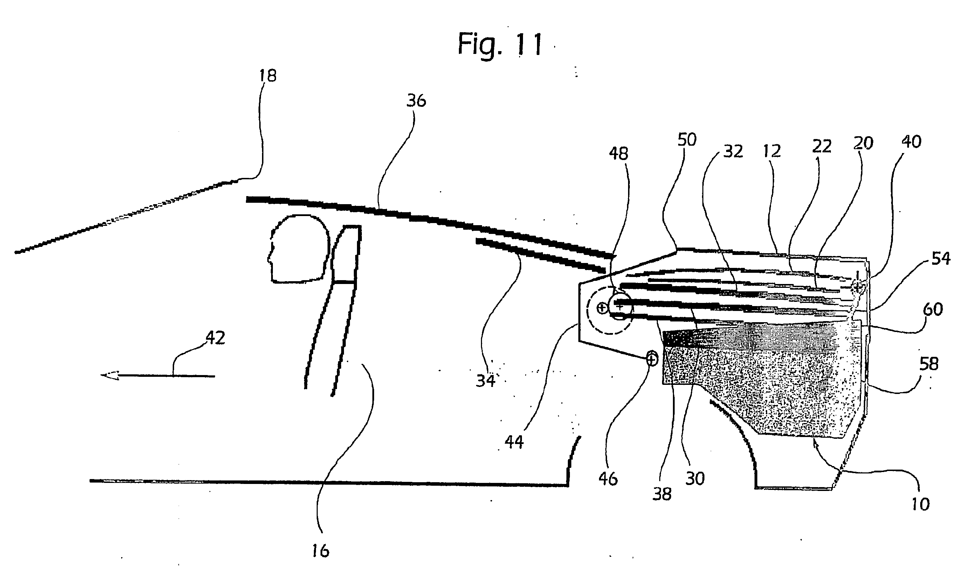

In this case, the first steps in the transition from the coupe configuration to the spider configuration coincide with those illustrated in Figures 1 to 5. Then, once the support structure 38 housing the panels 20, 22 on the respective portions 30, 32 of the guides 24, 26 has been pivoted downwards about the first axis 40, the additional operating means 54 cause (see Figure 10) this axis 40, as well as the structure 38 and all elements associated therewith, to move upwards (along the arrow 56). In this way the structure 38 is positioned immediately adjacent the lower surface of the closure element 12, thus minimizing the space taken up in the luggage compartment 10. In fact, the useful volume 58 available once the structure 38 has pivoted about the axis 40 is augmented by the additional volume 60 made available by the upward movement of the axis 40 and of the structure 38. Successively, in the same manner as illustrated in Figure 6 with reference to the preceding embodiment, the partition 44 (see Figure 11) is pivoted upwardly about the second axis 46, thus completely separating the luggage compartment 10 from the passenger compartment 16.

It is clear that in this case as well, when the car is to be restored to the coupé configuration from the spider configuration, the operations described above need only be carried out in reverse order.

The spatial movement of the axis 40 can be rectilinear or of any other type, selected so that it is best adapted to the available free space. In any event, this movement makes it possible to increase the useful load space available in the luggage compartment 10 when the motor car is in the spider configuration.

Alternatively, the additional operating means (see the element shown in a broken line 54b in Figure 9) could act directly on the support structure 38, once this has been released from the first axis 40. In this way, it would be possible to vary the spatial position of the structure 38 while leaving unchanged that of the first axis 40. The end result would be the same as that described above, that is an increase in the useful load space available in the luggage compartment 10 when the motor car is in the spider configuration.

Naturally, the principle of the invention remaining unchanged, manufacturing details and embodiments can vary widely from those described purely by way of non-limitative example, without departing thereby from the scope of the invention. In particular, the motor car of the invention could have either a single row of seats or a front row and a back row, the number of sliding roof panels could be selected from any number equal to or greater than two, while the upper closure element of the luggage compartment could be either fixed or movable.

## Claims

1. A motor car including a luggage compartment (10) with an upper closure element (12) and a roof (14) having an aperture (18) over the median and rear portions of the passenger compartment (16) with at least first and second sliding panels (20, 22) positionable selectively to a first configuration closing the aperture (18), in which the said panels (20, 22) are :arranged next to each other in series along the longitudinal axis (42) of the vehicle, and a second configuration in which the aperture (18) is open and the said panels (20, 22) are stored in the luggage compartment (10), the front edge (50) of the said element (12) for closing the luggage compartment (10) being adjacent the rear edge (52) of the panel (20) which is in the rearmost position in the said first closed configuration,
the said motor car being **characterised in that** it includes a support structure (38) housed in the upper portion of the said luggage compartment (10) beneath the closure element (12), the said panels (20, 22) being stored one on the top of the other within the said support structure (38) in the second configuration in which the aperture (18) is open.

2. A motor car according to Claim 1, including, along each side, a first guide (24) for the first panel (20) to slide along and a second guide (26) for the second panel (22) to slide along, each of the said first and second guides (24, 26) being formed by a front portion (34, 36) fixed to the body and a rear portion (30, 32) secured to the said support structure (38) which is pivoted by its rear portion about a first axis (40) orthogonal to the longitudinal axis (42) of the motor car and has operating means operable to rotate it about the said orthogonal axis (40).

3. A motor car according to either preceding Claim, in which at least the panel (20) in the rearmost position in the first, closed configuration is made of a transparent material.

4. A motor car according to any preceding Claim, including a plurality of sliding panels (20, 22) .

5. A motor car according to any preceding Claim, including a member for separating the luggage compartment (10) from the passenger compartment (16), with actuator means for moving it from a position in which it separates the luggage compartment (10) from the passenger compartment (16) into a position in which the luggage compartment (10) is in communication with the passenger compartment (16), and back again.

6. A motor car according to Claim 5, in which the said separating member is in the form of a shaped partition (44) pivoted by its lower edge about a second axis (46) orthogonal to the longitudinal axis (42) of the motor car.

7. A motor car according to Claim 5, in which the said separating member is formed by a shaped partition (44) slidably mounted on guides.

8. A motor car according to any preceding Claim from 2 to 7, including additional operating means (54) for varying the spatial position of the first axis (40) of the said structure (38).

9. A motor car according to any preceding Claim from 2 to 7, including additional operating means (54b) for varying the spatial position of the said support structure (38) while leaving unchanged that of the first axis (40).

## Patentansprüche

1. Kraftfahrzeug, das einen Kofferraum (10) mit einem oberen Abdeckelement (12) sowie ein Dach (14) aufweist, das eine Öffnung (18) über dem mittleren und hinteren Teil des Fahrgastraums (16) besitzt und mit zumindest einer ersten und einer zweiten Gleitplatte (20, 22) versehen ist, die wahlweise in einer ersten Anordnung, in der sie die Öffnung (18) verschließen und in der die Platten (20, 22) nebeneinander und nacheinander entlang der Längsachse (42) des Fahrzeugs angeordnet sind, und in einer zweiten Anordnung angeordnet werden können, in der die Öffnung (18) offen steht und in der die Platten (20, 22) im Kofferraum (10) untergebracht sind, wobei die Vorderkante (50) des Elements (12), das den Kofferraum (10) verschließt, neben der Hinterkante (52) der Platte (20) liegt, die sich in der ersten geschlossenen Anordnung in der hintersten Stellung befindet,
wobei das Kraftfahrzeug **dadurch gekennzeichnet ist, dass** es einen Tragaufbau (38) aufweist, der im oberen Teil des Kofferraums (10) unterhalb des Verschlusselements (12) untergebracht ist, wobei die Platten (20, 22) im Tragaufbau (38) in der zweiten Anordnung übereinander untergebracht sind, in der die Öffnung (18) offen steht.

2. Kraftfahrzeug gemäß Anspruch 1, wobei das Kraftfahrzeug entlang einer jeden Seite eine erste Führung (24), in der die erste Platte (20) gleiten kann, sowie eine zweite Führung (26) aufweist, in der die zweite Platte (22) gleiten kann, wobei sowohl die erste als auch die zweite Führung (24, 26) von einem vorderen Teil (34, 36), der an der Karosserie befestigt ist, und einem hinteren Teil (30, 32) gebildet werden, der am Tragaufbau (38) befestigt ist, der an seinem hinteren Teil um eine erste Achse (40) verschwenkt werden kann, die senkrecht zur Längsachse (42) des Kraftfahrzeugs liegt, und der eine Betätigungseinrichtung besitzt, die in Betrieb gesetzt werden kann, um den Tragaufbau um die senkrechte Achse (40) zu verschwenken.

3. Kraftfahrzeug gemäß jedem der bisherigen Ansprüche, wobei zumindest die Platte (20) in der hintersten Stellung in der ersten geschlossenen Anordnung aus einem durchsichtigen Material besteht.

4. Kraftfahrzeug gemäß irgendeinem der bisherigen Ansprüche, wobei das Kraftfahrzeug eine Vielzahl von Gleitplatten (20, 22) aufweist.

5. Kraftfahrzeug gemäß irgendeinem der bisherigen Ansprüche, wobei das Kraftfahrzeug ein Element aufweist, um den Kofferraum (10) vom Fahrgastraum (16) zu trennen, wobei eine Betätigungseinrichtung vorgesehen ist, um das Element aus einer Stellung, in der es den Kofferraum (10) vom Fahrgastraum (16) trennt, in eine Stellung zu bewegen, in der es den Kofferraum (10) mit dem Fahrgastraum (16) verbindet.

6. Kraftfahrzeug gemäß Anspruch 5, wobei das Trennelement in Form einer geformten Trennwand (44) ausgebildet ist, die an ihrem unteren Rand um eine zweite Achse (46) verschwenkt werden kann, die senkrecht zur Längsachse (42) des Kraftfahrzeugs liegt.

7. Kraftfahrzeug gemäß Anspruch 5, wobei das Trennelement von einer geformten Trennwand (44) gebildet wird, die in Schienen verschiebbar angebracht ist.

8. Kraftfahrzeug gemäß irgendeinem der bisherigen Ansprüche von 2 bis 7, wobei das Kraftfahrzeug eine zusätzliche Betätigungseinrichtung (54) aufweist, um die räumliche Lage der ersten Achse (40) des Aufbaus (38) zu verändern.

9. Kraftfahrzeug gemäß irgendeinem der bisherigen Ansprüche von 2 bis 7, wobei das Kraftfahrzeug eine zusätzliche Betätigungseinrichtung (54b) aufweist, um die räumliche Lage des Tragaufbaus (38) zu verändern, während die räumliche Lage der ersten Achse (40) unverändert bleibt.

## Revendications

1. Véhicule à moteur comprenant un compartiment à bagages (10) équipé d'un élément obturateur supérieur (12), et un pavillon (14) muni d'une ouverture (18) au-dessus des régions centrale et postérieure de l'habitacle (16), avec au moins des premier et second panneaux coulissants (20, 22) pouvant être sélectivement amenés à une première configuration occultant l'ouverture (18) et dans laquelle lesdits panneaux (20, 22) sont agencés en juxtaposition mutuelle, en série et le long de l'axe longitudinal (42) du véhicule, et une seconde configuration dans laquelle l'ouverture (18) est dégagée, et lesdits panneaux (20, 22) sont escamotés dans le compartiment à bagages (10), le bord antérieur (50) dudit élément (12) d'obturation du compartiment à bagages (10) étant adjacent au bord postérieur (52) du panneau (20) occupant la position la plus reculée dans ladite première configuration fermée,
ledit véhicule à moteur étant **caractérisé par le fait qu'**il présente une structure de support (38) logée dans la région supérieure dudit compartiment à bagages (10), au-dessous de l'élément obturateur (12), et lesdits panneaux (20, 22) étant stockés avec recouvrement réciproque, à l'intérieur de ladite structure de support (38), dans la seconde configuration dans laquelle l'ouverture (18) est dégagée.

2. Véhicule à moteur selon la revendication 1, comportant, le long de chaque côté, un premier guide (24) permettant un coulissement longitudinal du premier panneau (20) et un second guide (26) permettant un coulissement longitudinal du second panneau (22), chacun desdits premier et second guides (24, 26) étant matérialisé par une partie antérieure (34, 36) fixée au corps, et par une partie postérieure (30, 32) verrouillée sur ladite structure de support (38) qui peut pivoter, par sa région postérieure, autour d'un premier axe (40) orthogonal à l'axe longitudinal (42) dudit véhicule à moteur, et qui offre des moyens d'actionnement ayant pour effet de lui imprimer des rotations autour dudit axe orthogonal (40).

3. Véhicule à moteur selon une quelconque revendication précédente, dans lequel au moins le panneau (20) occupant la position la plus reculée, dans la première configuration fermée, est fabriqué en un matériau transparent.

4. Véhicule à moteur selon une quelconque revendication précédente, englobant une pluralité de panneaux coulissants (20, 22).

5. Véhicule à moteur selon une quelconque revendication précédente, comportant une pièce pour séparer le compartiment à bagages (10) d'avec l'habitacle (16), équipée de moyens actionneurs pour la déplacer depuis une position dans laquelle elle sépare le compartiment à bagages (10) d'avec l'habitacle (16), jusqu'à une position dans laquelle ledit compartiment à bagages (10) est en communication avec ledit habitacle (16), et inversement.

6. Véhicule à moteur selon la revendication 5, dans lequel ladite pièce de séparation revêt la forme d'une cloison profilée (44) animée de pivotements, par son bord inférieur, autour d'un second axe (46) orthogonal à l'axe longitudinal (42) dudit véhicule à moteur.

7. Véhicule à moteur selon la revendication 5, dans lequel ladite pièce de séparation est matérialisée par une cloison profilée (44) montée à coulissement sur des guides.

8. Véhicule à moteur selon l'une quelconque des revendications précédentes 2 à 7, comportant des moyens supplémentaires d'actionnement (54) pour faire varier la position occupée, dans l'espace, par le premier axe (40) de ladite structure (38).

9. Véhicule à moteur selon l'une quelconque des revendications précédentes 2 à 7, comportant des moyens supplémentaires d'actionnement (54b) pour faire varier la position occupée, dans l'espace, par ladite structure de support (38), sans aucune modification de la position du premier axe (40).
